Europäisches Patentamt

**European Patent Office**

**Office européen des brevets**

(11) Numéro de publication: **0 141 739**
**B1**

(12) **FASCICULE DE BREVET EUROPÉEN**

(45) Date de publication du fascicule du brevet:
20.07.88

(21) Numéro de dépôt: **84402181.6**

(22) Date de dépôt: **30.10.84**

(51) Int. Cl.⁴: **G 01 C 19/64**, G 01 P 3/36

(54) Dispositif interférométrique de mesure d'une vitesse de rotation angulaire.

(30) Priorité: **04.11.83 FR 8317586**

(43) Date de publication de la demande:
**15.05.85 Bulletin 85/20**

(45) Mention de la délivrance du brevet:
**20.07.88 Bulletin 88/29**

(84) Etats contractants désignés:
**DE GB**

(56) Documents cité:
**EP-A-0 074 609**
**EP-A-0 079 268**
**FR-A-2 500 937**
**US-A-4 344 706**
**US-A-4 396 290**

(73) Titulaire: **THOMSON- CSF, 173, Boulevard Haussmann, F-75379 Paris Cédex 08 (FR)**

(72) Inventeur: **Huignard, Jean- Pierre, THOMSON- CSF SCPI 173, bld Haussmann, F-75379 Paris Cédex 08 (FR)**
Inventeur: **Arditty, Hervé, THOMSON- CSF SCPI 173, bld Haussmann, F-75379 Paris Cédex 08 (FR)**
Inventeur: **Puech, Claude, THOMSON- CSF SCPI 173, bld Haussmann, F-75379 Paris Cédex 08 (FR)**

(74) Mandataire: **Lepercque, Jean, THOMSON- CSF SCPI 19, avenue de Messine, F-75008 Paris (FR)**

EP 0 141 739 B1

## Description

L'invention se rapporte à un dispositif interférométrique appliqué à la mesure d'une vitesse de rotation angulaire par l'intermédiaire de l'effet Sagnac.

Un interféromètre de l'art connu comporte principalement une source d'énergie lumineuse généralement constituée par un laser; un dispositif optique constitué soit d'un certain nombre de miroirs, soit d'une fibre optique enroulée sur elle-même, ce dispositif formant guide d'onde; un dispositif de séparation et de mélange de la lumière et un dispositif de détection et de traitement du signal détecté.

Dans un tel interféromètre, il existe deux ondes issues du dispositif séparateur et parcourant en sens opposés un même trajet optique.

Une propriété fondamentale des interféromètres en anneau est la réciprocité qui peut s'exprimer comme suit: toute perturbation du trajet optique affecte semblablement les ondes bien que ces deux ondes ne la subissent ni exactement au même instant, ni dans le même sens.

Il existe cependant deux types de perturbations qui affectent la réciprocité.

Il s'agit d'une part des perturbations qui varient dans le temps, ce dans un laps de temps comparable au temps que mettent les ondes à se propager le long du chemin optique de l'interféromètre; et d'autre part, les pertubations dites "non réciproques", c'est à dire les perturbations n'ayant pas le même effet sur les ondes selon qu'elles se propagent dans un sens ou dans un autre le long du chemin optique. Il s'agit d'effet physiques qui détruisent la symétrie du milieu dans lequel se propagent les ondes.

Deux effets connus présentent ce dernier type de perturbations:

- l'effet Faraday, ou effet magnéto-optique colinéaire, par lequel un champ magnétique crée une orientation préférentielle du spin des électrons d'un matériau optique.

- et l'effet Sagnac, ou effet inertiel relativiste, dans lequel la rotation de l'interféromètre par rapport à un repère Galliléen détruit la symétrie du temps de propagation. Cet effet est mis a profit pour réaliser des gyromètres notamment.

En l'absence de manifestation de perturbations "non réciproques", la différence de phase, que l'on appellera dans ce qui suit $\Delta \Phi$, entre les deux ondes, qui se recombinent dans le dispositif de séparation et de mélange après avoir parcouru le chemin optique, est nulle. Le dispositif de détection et de traitement détecte des signaux représentant la puissance optique de l'onde composite obtenue après recombinaison. Cette puissance peut se décomposer dans les interféromètres de l'art connu en deux composantes: une composante constante et une composante n'existant qu'à l'apparition de perturbations "non-réciproques".

Dans les dispositifs de l'art connu, on connait des dispositifs utilisant un cristal photoréfractif.

C'est le cas de la demande de brevet européen no EP-A-0 079 268 dans laquelle deux ondes contrarotatives de l'interféromètre interfèrent dans le cristal photoréfractif de façon à obtenir un interféromètre ne permettant de détecter que les effets non réciproques.

Par rapport à ce dispositif de l'art connu, le dispositif proposé se différencie en ce qu'il prévoit dans une cavité optique, par exemple triangulaire, un cristal photoréfractif amplificateur et en ce que deux ondes contrarotatives de fréquences différentes se propagent dans la cavité. Ce dispositif présente donc le grand avantage d'être insensible aux faisceaux retrodiffusés par les miroirs de la cavité optique, et de plus pour chaque onde contrarotative le gain présenté par la cavité est unidirectionnel.

D'autres dispositifs de l'art antérieur sont décrits dans les documents FR-A-2 500 937, US-A-4 396 290, US-A-4 344 706 et EP-A-0 074 609.

L'invention a pour objet un dispositif interférométrique de mesure d'une vitesse de rotation angulaire, comprenant: des moyens de guidage optique formant une boucle fermée dans laquelle circule deux ondes contrarotatives; des moyens de mélange de ces deux ondes contrarotatives, des moyens de détection reliés à ces moyens de mélange; un cristal photoréfractif et des moyens pour générer un champ électrique aux bornes de ce cristal, ce cristal étant disposé sur le parcours de la boucle fermée, caractérisé en ce qu'il comporte également une source qui délivre deux ondes de pompe au cristal photoréfractif chacune interférant dans ledit milieu avec l'une de ces deux ondes contrarotatives, et générant ainsi des franges d'interférence de manière que les deux ondes contrarotatives aient deux fréquences différentes, le champ électrique étant de direction perpendiculaire à ces franges d'interférence.

D'autres caractéristiques et avantages apparaitront dans la description ci-après, en référence aux figures annexées où:

- les figures 1 et 2 illustrent un dispositif de l'art connu.

- la figure 3 est une figure explicative du fonctionnement du dispositif de l'invention.

- la figure 4 représente une vue schématique du dispositif de l'invention.

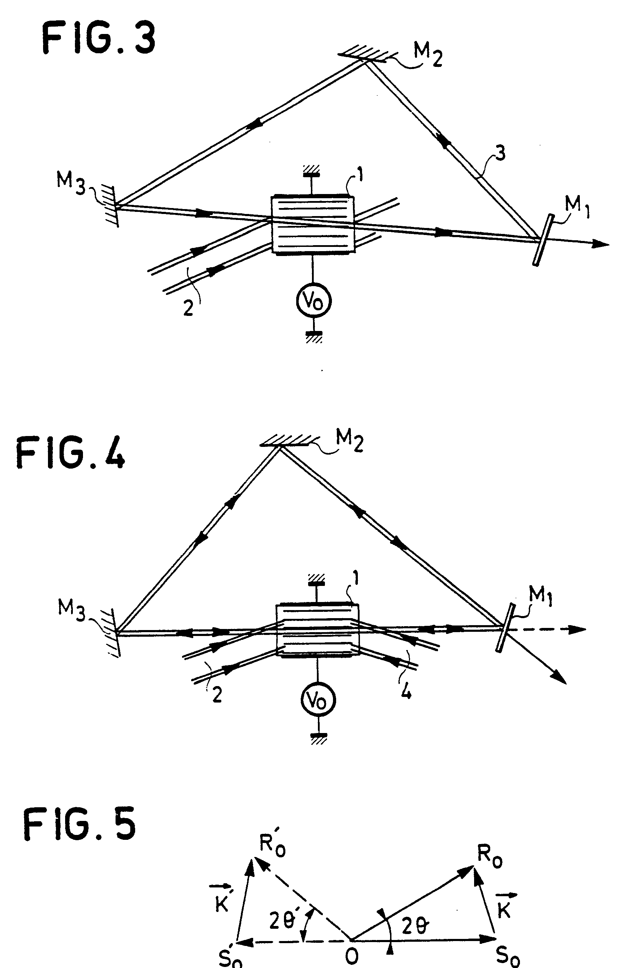

- les figures 3 à 7 illustrent différents aspects du dispositif de l'invention.

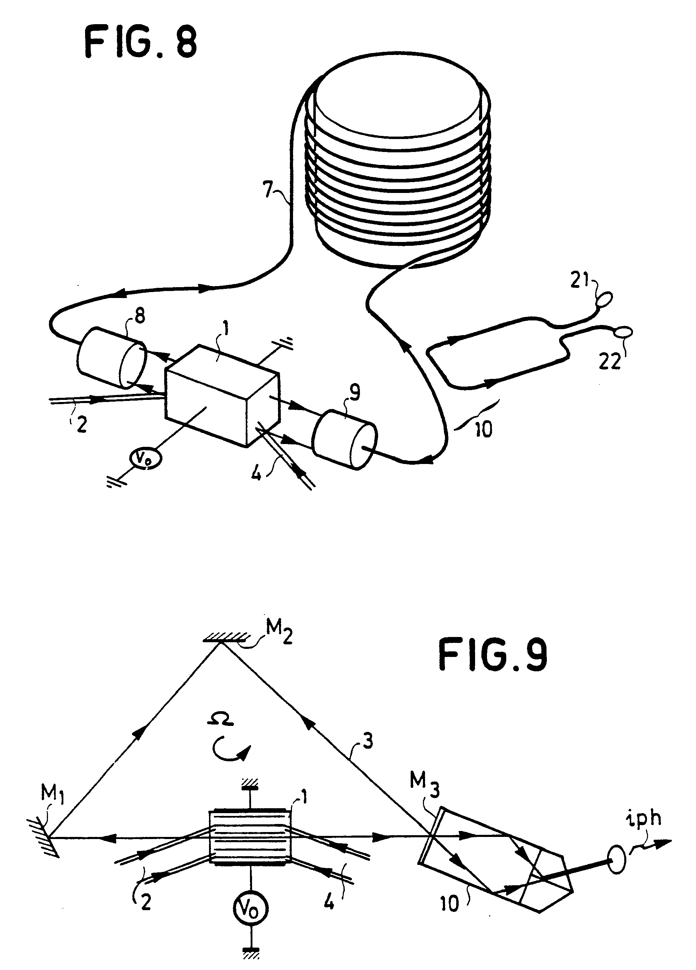

- la figure 8 illustre une variante du dispositif de l'invention.

- la figure 9 illustre un aspect du dispositif de l'invention.

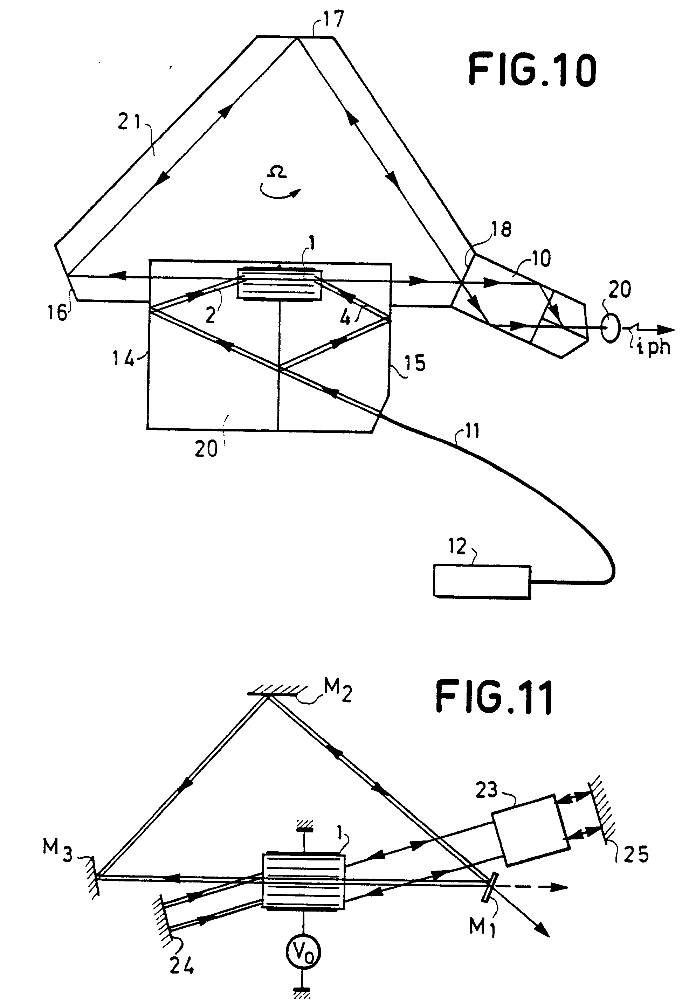

- la figure 10 illustre une réalisation du dispositif de l'invention.

- la figure 11 illustre une variante du dispositif de l'invention.

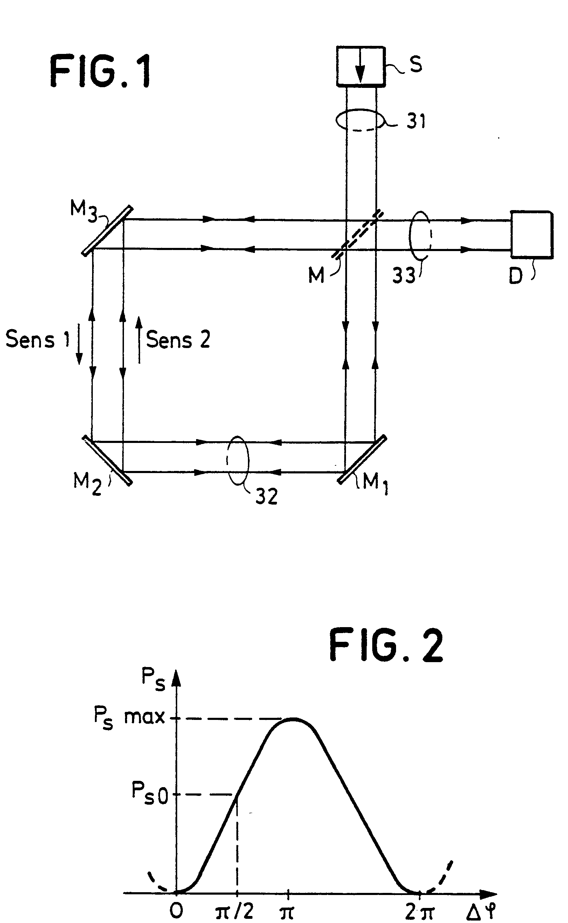

La figure 1 représente schématiquement un interféromètre en anneau de l'art connu.

Une source laser 5 produit un faisceau de rayons parallèles 31 vers un dispositif séparateur constitué par une lame ou un miroir semi-transparent M.

Un certain nombre de miroirs (trois sur la figure 1: $M_1$ à $M_3$) définissent un trajet optique, formant l'anneau de l'interféromètre rebouclé sur le dispositif répartiteur M qui joue également le rôle d'un dispositif de mélange et définit ainsi une branche de sortie 33. Le faisceau émergeant est alors dirigé vers un dispositif D de détection et de traitement des signaux détectés.

L'anneau est parcouru par deux ondes se propageant en sens inverse: l'une dans le sens horaire (ou sens 2), l'autre dans le sens anti-horaire (ou sens 1). Ces deux ondes se recombinent sur la lame séparatrice M. Le résultat de cette recombinaison peut être observé dans la branche de sortie 33.

Dans la branche d'entrée 1 l'équation suivante est vérifiée:

$$P_e = P_{1e} + P_{2e} + 2\sqrt{P_{1e}P_{2e}}\cos(\Delta\Phi)$$

Dans la branche de sortie 33, l'équation suivante est vérifiée:

$$P_s = P_{1s} + P_{2s} - 2\sqrt{P_{1s}P_{2s}}\cos(\Delta\Phi)$$

dans lesquelles $P_e$ et $P_s$ sont les puissances optiques. $\Delta\Phi$ est la différence de phase entre les deux ondes se propageant en sens inverse dans l'anneau 32 au moment de la recombinaison. En l'absence de perturbation "non-réciproque", cette différence de phase $\Delta\Phi$ est nulle.

Si on considère, à titre d'exemple non limitatif, le cas particulier d'un gyromètre mettant en oeuvre un interféromètre à anneau, une perturbation "non-réciproque" va être crée par la mise en rotation du gyromètre. Dans ce cas la différence de phase $\Delta\Phi$ n'est plus nulle.

La relation donnant $\Delta\Phi$ est:

$\Delta\Phi = \alpha \Omega$ où $\Omega$ est la vitesse de rotation et $\alpha$ est une variable donnée par la relation:

$$\alpha = k.\frac{L}{\lambda c}$$

ou: k est une constante dépendant de la géométrie du gyromètre.

- L la longueur du parcours optique
- $\lambda$ la longueur d'onde de la lumière produite par la source laser S
- et c la vitesse de la lumière dans l'anneau 2.

Lorsque la vitesse de rotation $\Omega$ augmente, la différence de phase $\Delta\Phi$ augmente dans les mêmes proportions. La puissance optique $P_s$ dans sa branche de sortie 33 évolue selon une loi cosinusoïdale.

La sensibilité de la mesure pour une valeur $\Delta\Phi$ donnée est exprimée par la dérivée de la fonction Ps:

$$\frac{d\,Ps}{d(\Delta\phi)} = 2\sqrt{P_{1s}\,P_{2s}}\,\sin(\Delta\phi)$$

La variation de la puissance optique dans la branche de sortie 2 est illustrée par le diagramme de la figure 2.

On peut considérer que les termes $P_{1s}$ et $P_{2s}$ sont égaux. Il s'en suit que pour une différence de phase $\Delta\Phi = o$, la puissance détectée est nulle. Elle passe par un maximum $P_{smax}$ pour $\Delta\Phi = \pi$ et de nouveau par zéro pour $2\pi$ et ainsi de suite.

Le dispositif de l'invention utilise une amplification cohérente par mélange à deux ondes dans un cristal photoréfractif.

Une onde de pompe intense ($\cong 10$mW cm$^{-2}$) interfère avec une onde signal de faible intensité (99 $\mu$Wcm$^{-2}$) dans le volume d'un cristal photoréfractif, tel que l'oxyde de bismuth-silicium (B.S.O.) ou le titanate de Baryum (BaTiO$_3$), un champ $E_o$ étant appliqué perpendiculairement aux franges d'interférences. Compte tenu des effets d'autodiffraction de l'onde de pompe sur le réseau de phase enregistrée en temps réel dans le cristal, on peut induire un transfert d'énergie de l'onde de pompe vers l'onde signal (amplification paramétrique). Dans ces conditions, l'intensité transmise se met sous la forme:

$I_s = I_{so}\exp[\Gamma - \alpha]xl$

avec: $\Gamma$: coefficient exponentiel de gain
$\alpha$ : coefficient d'absorption
l : longueur d'intéraction du matériau

Le gain $\Gamma$ est relié à la variation d'indice maximale $\Delta n_s$ par la relation:

$Y = 4\pi\frac{\Delta n_s}{\lambda}$

Les conditions d'obtention d'une valeur élevée du gain dans les cristaux BSO sont les suivantes :

- L'enregistrement est réalisé par un système de franges d'interférences se déplaçant à vitesse V telle que: $KV\tau = 1$; $K = \frac{2\pi}{\Lambda}$; $\Lambda$ pas des strates; $\tau$ constante de temps d'établissement du réseau. Ceci a pour effet d'introduire un décalage spatial de $\pi/2$ entre la variation d'indice et le réseau d'illumination dû aux franges d'interférences (réponse non locale). Ce réseau d'interférences à vitesse V s'obtient en translatant la fréquence de l'une des ondes pompe ou signal a une quantité $\delta = \frac{1}{2\pi\tau}$

- Le pas des strates est choisi autour de la valeur $\Lambda \cong 20\mu$m, ce qui correspond au maximum de la courbe de gain $\Gamma$ en fonction de la fréquence spatiale du réseau $\Lambda = \frac{\lambda}{2\theta}$; $2\theta$ étant l'angle entre les deux faisceaux interférant sur le cristal.

Pour cette fréquence spatiale des valeurs de $\Gamma$ de l'ordre de 5 à 7 cm$^{-1}$ ont été obtenues pour un champ appliqué de 10 KVcm$^{-1}$ et $\beta > 10^{-3}$ avec $\beta = \frac{I_{ro}}{I_{so}}$; rapport d'intensité des ondes interférant sur le cristal. Ces valeurs très élevées du gain ont permis d'amplifier par 500 un faisceau signal incident de très faible intensité [$I_{Ro} \cong 10\mu$mWcm$^{-2}$; $I_{So} \cong 10\mu$mWcm$^{-2}$].

La constante de temps d'établissement du phénomène (donc la translation de fréquence $\delta$) dépendent de l'intensité incidente sur l'onde de pompe.

Dans le domaine spectral $\lambda \cong 500$nm, la constante de temps d'établissement du changement d'indice par effet photoréfractif dans le cristal BSO est donnée par la relation:

$\tau_S \cong \frac{10^{-1}}{I_{Ro}}l$(mWcm$^{-2}$)

par exemple: $I_{Ro} = 10$mWcm$^{-2}$; $\tau = 10$ms

$I_{Ro} = 100$mWcm$^{-2}$; $\tau = 1$ms

La translation de fréquence correspondante est:

$$\delta = \tfrac{10}{2\pi}I_{Ro}$$

Exemple:  $I_{Ro} = 10\,mWcm^{-2}$; $\delta = 17\,Hz$

$I_{Ro} = 100\,mWcm^{-2}$; $\delta = 170\,Hz$

$I_{Ro} = 1\,mWcm^{-2}$; $\delta = 1{,}7\,Hz$

Les conditions d'amplifications étant ainsi réalisées ($\Gamma = 5{,}7\,cm^{-1}$; $\alpha \cong 1\,cm^{-1}$ par exemple) on peut obtenir l'oscillation en fermant le trajet optique par une cavité constituée de trois miroirs $M_1$, $M_2$, $M_3$ dont l'un est partiellement réfléchissant comme représenté à la figure 3.

La cavité étant préréglée, l'oscillation démarre sur le bruit dû à la diffusion-diffraction des composants. Mais la fréquence de l'onde générée est translatée d'une quantité $\delta$ telle que $\delta = \tfrac{1}{2\pi\tau}$. Ceci est vérifié expérimentalement en faisant interférer l'onde incidente (fréquence fo) et l'onde dans la cavité (fréquence fo + $\delta$): il en résulte un système d'interférence se déplaçant à la vitesse V. La translation de fréquence $\delta$ est aussi générée par toute vibration basse fréquence de l'un des miroirs constituant la cavité. L'emploi d'un miroir piézoélectrique peut donc être envisagé pour initier le démarrage de l'oscillation.

Compte tenu des propriétés de l'amplificateur, le gain n'est obtenu que pour une onde se propageant dans un seul sens comme indiqué sur la figure 3. Le gain est rigoureusement nul pour toute onde se propageant en sens inverse. Une telle onde interférant avec l'onde pompe 2, crée une structure diffractante par "réflexion" de pas $\Lambda = \mu m$ qui n'est pas enregistrée par le cristal 1.

Comme représenté à la figure 4 une onde contrarotative s'obtient par l'adjonction d'une autre onde de pompe 4 d'intensité $I_{R'o}$ égale ou différente à l'intensité $I_{Ro}$ de la première onde de pompe 2 cette onde génère dans la cavité une oscillation à fréquence $f_o + \delta$ si $I_{R'o} = I_{Ro}$ ou de fréquence $f_\sigma + \delta'$ si $I_{R'o} \neq I_{Ro}$. Le diagramme des vecteurs K correspondant aux deux réseaux indépendants photoinduits dans le cristal 1 est donné sur la figure 5. Sur cette figure Ro,So et R'o et S'o représentent les vecteurs d'onde des ondes 2 et 4.

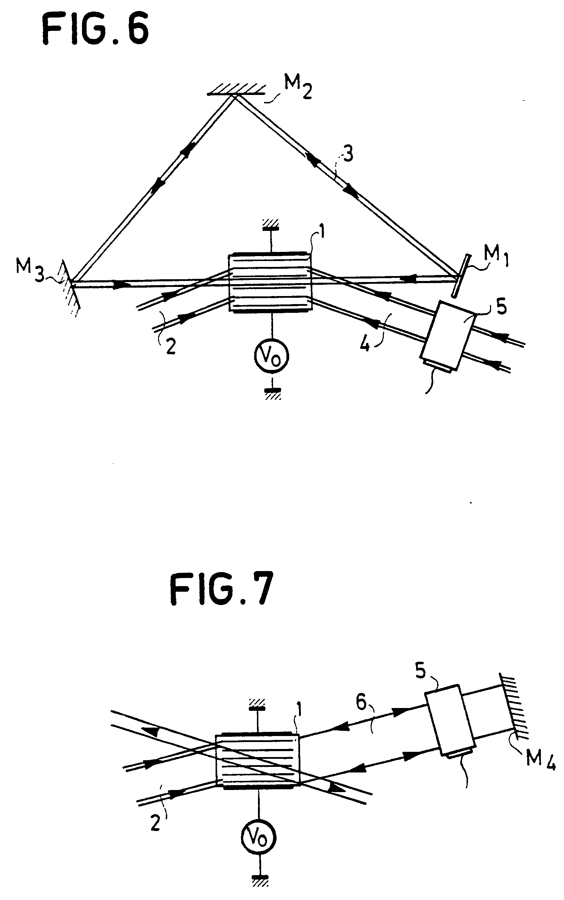

Une translation de fréquence importante de l'onde contrarotative due à $I_{R'o}$ peut être obtenue par l'adjonction d'un modulateur de phase 5 sur le faiceau $I_{R'o}$ ou d'une cellule de Bragg comme indiqué sur la figure 6. Dans ce dernier cas, la fréquence de l'onde contrarotative dans la cavité vaut $f_o + \Delta + \delta'$ si $I_{R'o} \neq I_{Ro}$ ou $f_o + \Delta$ si $I_{R'o} = I_{Ro}$. Dans tous les cas deux ondes de fréquences nettement distinctes peuvent circuler dans la cavité triangulaire. La conséquence importante pour le dispositif est la suivante: Toute onde rétrodiffusée par les composants optiques $M_1$, $M_2$, $M_3$ n'est pas amplifiée après interférence avec l'onde de pompe puisque de fréquence différente et satisfaisant à la condition $\Delta >> \tfrac{1}{\tau}$; $\tau =$ constante de temps d'inscription du réseau. Une autre possibilite quant à la génération de l'onde contrarotative est donnée sur la figure 7. La lecture est effectuée par une onde antiparallèles à l'onde $I_{Ro}$ obtenue à l'aide du miroir $M_4$. La fréquence de l'onde générée vaut dans ce cas $f_o-\delta' + \Delta$ si $I_{Ro} \neq I_{R'o}$ et $f_o-\delta + \Delta$ si $I_{Ro} = I_{R'o}$.

Les deux ondes contrarotatives interfèrent dans le cristal 1 pour donner un système de franges d'interférences mobiles et parallèles à la direction du champ appliqué. Pour ces deux raisons il n'est pas enregistré dans le cristal photoréfractif 1 sous la forme d'une variation d'indice photoinduite. Compte tenu des fonctions de filtrage spatial et temporel du cristal 1 on enregistre dans celui-ci les deux seuls réseaux principaux. L'écart de fréquences entre les faisceaux interférant vaut respectivement $\delta(I_{RO})$ et $\delta'(I_{R'o})$ dont les franges sont en moyenne perpendiculaires à la direction du champ appliqué.

La propagation dans la cavité définie par les miroirs $M_1$, $M_2$, $M_3$ peut être remplacée par la propagation dans une spire ou N spires d'une bobine 7 de fibre optique monomode; deux lentilles 8, 9 a gradient d'indice assurant le couplage entre les deux extrémités de la fibre; comme représenté à la figure 8. La détection est réalisé à l'aide d'un coupleur bidimentionnel 10 relié aux deux détecteurs 21 et 22.

La détection de la rotation angulaire $\Omega$ peut être obtenue en faisant interférer deux faisceaux prélevés sur les ondes contrarotatives de la cavité par l'intermédiaire du miroir $M_3$ partiellement réfléchissant comme représenté à la figure 9.

Le déphasage induit s'écrit:
$$\Delta\Phi = \tfrac{8}{\lambda_o c}xAx\Omega$$

La composante utile du photocourant recueilli après battement des deux ondes de fréquence différente se met sous la forme:

iph $\alpha$ cos $(\Delta + \delta'\delta)xt + \Delta\Phi$; avec $I_{Ro} \neq I_{R'o}$

iph = cos $(\Delta xt + \Delta\Phi)$; avec $I_{Ro} = I_{R'o}$

Cette dernière condition est intéressante puisque dans ce cas la fréquence du signal de battement est indépendante des fluctuations éventuelles de l'intensité $I_o$ du laser de pompe.

Une mesure de la phase du signal permet d'obtenir $\Delta\Phi$ donc $\Omega$ par la relation:
$$\Omega = \tfrac{\lambda_o c}{8\pi}x\tfrac{\Delta\Phi}{A}$$

A étant la surface de la cavité définie par $M_1$, $M_2$, $M_3$.

Pour N spires de fibre monomode: $\Omega = \tfrac{\lambda_o c}{8\pi}x\tfrac{\Delta\Phi}{N.A}$.

Un exemple de dispositif compact permettant de générer les ondes de pompes $I_{Ro}$ et $I_{R'o}$ est donné sur la figure 10. Les deux ondes contrarotatives se propagent dans la cavité constituée par un seul bloc de verre.

Ce bloc de verre est constitué de trois parties qui sont rassemblées.

- une première partie 20 comprenant le cristal 1 et dans lequel un faisceau 11 issu d'un laser 12 se subdivise en deux faisceaux 2 et 4 en se réfléchissant sur une paroi semi réfléchissante 13 et sur les deux faces 14 et 15.

- Une deuxième partie 21 qui forme la cavité proprement dite dont trois faces 16, 17, 18 permettent de réaliser les trois miroirs et $M_1$, $M_2$, $M_3$.

- Une troisième partie 10 qui permet d'obtenir le signal iph détecté.

Ainsi le dispositif de l'invention présente les avantages suivants:

- Le gain présenté par la cavité est unidirectionnel.

- Le dispositif est insensible aux faisceaux retrodiffusés par les miroirs de la cavité. En effet les deux ondes contrarotatives ont des fréquences optiques différentes. La translation de fréquence est contrôlée par les intensités respectives $I_{R_0}$ et $I_{R'_0}$ des ondes de pompes.

- Les deux réseaux inscrits dans le milieu photoréfractif sont indépendants. Il n'y a donc pas de couplage de modes entre les ondes contrarotatives.

Le dispositif de l'invention pourrait, tout aussi bien, être réalisé en optique intégrée avec des guides d'onde optiques.

La figure 11 représente une variante du dispositif de l'invention. Le milieu 1 est disposé dans une cavité laser qui permet de générer les ondes de pompe, avec un milieu amplificateur 23 et les deux miroirs 24 et 25 qui délimitent cette cavité.

## Revendications

1. Dispositif interférométrique de mesure d'une vitesse de rotation angulaire, comprenant : des moyens de guidage optique formant une boucle fermée dans laquelle circulent deux ondes contrarotatives; des moyens de mélange de ces deux ondes contrarotatives, des moyens de détection reliés à ces moyens de mélange; un cristal photoréfractif (1) et des moyens pour générer un champ électrique (Eo), aux bornes de ce cristal (1), ce cristal (1) étant disposé sur le parcours de la boucle fermée, caractérisé en ce qu'il comporte également une source (S) qui délivre deux ondes de pompe (2, 4) au cristal photoréfractif chacune interférant dans ledit cristal (1) avec l'une de ces deux ondes contrarotatives, et générant ainsi des franges d'interférence de manière que les deux contrarotatives aient deux fréquences différentes, le champ électrique ($E_o$) étant de direction perpendiculaire à ces franges d'interférence.

2. Dispositif selon la revendication 1, caractérisé en ce que les moyens de guidage comprennent au moins trois miroirs plans ($M_1$, $M_2$, $M_3$) dont les surfaces réfléchissantes sont disposées vers l'intérieur de la boucle, l'un de ces miroir ($M_1$, $M_3$) étant un miroir semi-transparent.

3. Dispositif selon la revendication 2, caractérisé en ce que l'un des miroirs est un miroir en matériau piézoélectrique.

4. Dispositif selon la revendication 1,

caractérisé en ce que les moyens de guidage comprennent une fibre optique (7).

5. Dispositif selon la revendication 1, caractérisé en ce qu'un modulateur de phase (5) est disposé sur l'une des deux ondes signal (2, 4) issue de la source (S) avant qu'elle n'atteigne le cristal (1).

6. Dispositif selon la revendication 1, caractérisé en ce qu'un miroir ($M_4$) est disposé sur le trajet de l'un des faisceau issu de la source après traversée du cristal photoréfractif (1) de manière à réfléchir ce faisceau vers ce cristal (1).

7. Dispositif selon la revendication 1, caractérisé en ce que le cristal photoréfractif (1) est disposé dans une cavité laser.

8. Dispositif selon la revendication 1 caractérisé en ce que le cristal photoréfractif est un cristal d'oxyde de bismuth-silicium.

9. Dispositif selon la revendication 1, caractérisé en ce que le cristal photoréfractif est réalisé en Titanate de Baryum.

## Patentansprüche

1. Interferometervorrichtung zur Messung einer Winkeldrehgeschwindigkeit, mit: einer optischen Führungseinrichtung, die eine geschlossene Schleife bildet, in welcher zwei gegensinnig rotierende Wellen umlaufen: mit einer Mischeinrichtung für diese zwei gegensinnig rotierenden Wellen, einer Detektionseinrichtung, die mit dieser Mischeinrichtung verbunden ist; mit einem lichtbrechenden Kristall und Mitteln, um an den Anschlüssen dieses Kristalls ein elektrisches Feld (Eo) zu erzeugen, wobei dieser Kristall auf dem Wege der geschlossenen Schleife angeordnet ist, dadurch gekennzeichnet, daß sie ferner eine Quelle (S) aufweist, welche dem lichtbrechenden Kristall zwei Pumpenwellen (2, 4) aufgibt, wobei diese Wellen in dem obengenannten Kristall (1) mit einer dieser zwei gegensinnig rotierenden Wellen interferieren und Interferenzstreifen erzeugen, so daß die zwei gegensinnig rotierenden Wellen zwei verschiedene Frequenzen aufweisen, wobei das elektrische Feld (Eo) eine senkrechte Richtung in Bezug auf diese Interferenzstreifen besitzt.

2. Vorrichtung nach Anspruch 1, dadurch gekennzeichnet, daß die Führungseinrichtung wenigstens drei ebene Spiegel ($M_1$, $M_2$, $M_3$) umfaßt, deren reflektierende Oberflächen zum Inneren der Schleife angeordnet sind, wobei einer dieser Spiegel ($M_1$, $M_3$) ein halbdurchlässiger Spiegel ist.

3. Vorrichtung nach Anspruch 2, dadurch gekennzeichnet, daß einer dieser Spiegel aus einem piezoelektrischen Material besteht.

4. Vorrichtung nach Anspruch 1, dadurch gekennzeichnet, daß die Führungseinrichtung eine optische Faser (7) umfaßt.

5. Vorrichtung nach Anspruch 1, dadurch gekennzeichnet, daß ein Phasenmodulator (5) in einer der beiden Signalwellen (2, 4) angeordnet ist, welche aus der Quelle (S) herkommt, bevor sie den Kristall (1) erreicht.

6. Vorrichtung nach Anspruch 1, dadurch gekennzeichnet, daß ein Spiegel (M ) auf dem Weg eines aus der Quelle kommenden Bündels nach der Durchquerung des lichtbrechenden Kristalls angeordnet ist, so daß er dieses Bündel zu diesem Kristall reflektiert.

7. Vorrichtung nach Anspruch 1, dadurch gekennzeichnet, daß der lichtbrechende Kristall (1) in einem Laserhohlraum angeordnet ist.

8. Vorrichtung nach Anspruch 1, dadurch gekennzeichnet, daß der lichtbrechende Kristall ein Wismut-Silizium-Oxidkristall ist.

9. Vorrichtung nach Anspruch 1, dadurch gekennzeichnet, daß der lichtbrechende Kristall aus Barium-Titanat besteht.

## Claims

1. An interferometric device for measuring angular velocity comprising: optical guide means forming a closed loop in which two contrarotating waves circulate; means for mixing these two contrarotating waves, detecting means connected with such mixing means; a photorefractive crystal (1) and means for generating an electric field (Eo) at the limits of the crystal (1), such crystal being placed on the trajectory of the closed loop, characterized in that it comprises a source (S) which supplies pump waves (2 and 4) to the photorefractive crystal, each such wave interfering in the said crystal (1) with one of the two contrarotating waves and thus generating interference fringes in such a manner that the two contrarotating waves have different frequencies, the electric field ($E_o$) having a direction perpendicular to the interference fringes.

2. The device as claimed in claim 1 characterized in that the guide means comprise at least three plane mirrors ($M_1$, $M_2$ and $M_3$) whose reflecting surfaces are placed on the interior of the loop, one mirror ($M_1$ and $M_3$) being a semitransparent mirror.

3. The device as claimed in claim 2 characterized in that one of the mirrors is a mirror made of piezoelectric material

4. The device as claimed in claim 1 characterized in that the guide means comprise an optic fiber (7).

5. The device as claimed in claim 1 characterized in that a phase modulator (5) is placed on one of the two signal waves (2 and 4) coming from the source (S) prior to such wave having reached the crystal (1).

6. The device as claimed in claim 1 characterized in that one mirror ($M_4$) is placed on the trajectory of one of the beams coming from the source after having passed through the photorefractive crystal (1) in such a manner as to reflect this beam towards the crystal (1).

7. The device as claimed in claim 1 characterized in that the photorefractive crystal (1) is placed in a laser cavity.

8. The device as claimed in claim 1 characterized in that the photorefractive crystal is a bismuth silicon oxide crystal.

9. The device as claimed in claim 1 characterized in that the photorefractive crystal is a made of barium titanate.

# FIG.1

Sens 1    Sens 2

# FIG. 2

# FIG.3

# FIG.4

# FIG.5

# FIG.6

# FIG.7

# FIG. 8

# FIG.9

# FIG.10

# FIG.11